# EUROPEAN PATENT SPECIFICATION

(11) **EP 4 350 231 B1**
(45) Date of publication and mention of the grant of the patent: **14.01.2026**
(21) Application number: 22832754.0
(22) Date of filing: 08.06.2022
(51) Int. Cl.: F24F 7/08, F24F 1/0038, F24F 13/20

(54) **VENTILATION DEVICE AND METHOD FOR ASSEMBLING VENTILATION DEVICE**
LÜFTUNGSVORRICHTUNG UND VERFAHREN ZUR MONTAGE DER LÜFTUNGSVORRICHTUNG
DISPOSITIF DE VENTILATION ET PROCÉDÉ D'ASSEMBLAGE DE DISPOSITIF DE VENTILATION

(30) Priority: 29.06.2021 JP 2021107409
(43) Date of publication of application: 10.04.2024
(73) Proprietor: Daikin Industries, Ltd., Osaka-Shi, Osaka 530-0001 (JP)
(72) Inventor: IKEBE, Masanori, Osaka-shi, Osaka 530-0001 (JP); SUZUKI, Yuya, Osaka-shi, Osaka 530-0001 (JP)
(74) Representative: Hoffmann Eitle
(86) International application number: PCT/JP2022/023132
(87) International publication number: WO 2023/276597

(56) References cited:
- JP-A- 2000 274 765
- JP-A- 2004 045 029
- JP-A- 2008 122 009
- JP-A- 2011 085 299
- JP-A- 2013 164 200
- JP-A- 2020 020 522
- JP-A- H06 221 617
- JP-A- H06 221 617
- JP-A- H08 114 335
- JP-A- H1 073 296
- US-A1- 2015 017 906

## Description

### TECHNICAL FIELD

The present invention relates to a ventilation apparatus and a method for assembling a ventilation apparatus.

### BACKGROUND ART

Patent Document 1 discloses a ventilation apparatus, the articles for use in which are modularized so that the modules can be selectively mounted to the ventilation apparatus.

### CITATION LIST

### PATENT DOCUMENT

Patent Document 1: Japanese Unexamined Patent Publication No. 2007-139410 JP H06-221617 A discloses features falling under the preamble of claim 1.

### SUMMARY OF THE INVENTION

### TECHNICAL PROBLEM

Each of the modules has an air passage. Sequentially coupling the plurality of modules together allows the air passages of the adjacent modules to communicate with each other. Thus, the ventilation apparatus has an air passage formed from the module at one end to the module at the other end.

The positions of the air passages of the modules differ among the modules. Thus, depending on the modules to be selected, it may be that the air passages of the adjacent modules do not communicate with each other and the modules cannot be selected freely.

It is an object of the present invention to provide a ventilation apparatus that enables easy combination of a plurality of modules. In the following passages, the term "disclosure" refers to the invention as described in the description; the scope of protection is defined by the appended claims.

### SOLUTION TO THE PROBLEM

A first aspect of the present disclosure is directed to a ventilation apparatus according to claim 1.

According to the first aspect, the first, second, third, and fourth openings (38), (42), (43), and (52) of the modules (30, 40, 50) overlap with one another from the first module (30) to the third module (50) as viewed from the direction of arrangement of the first to third modules (30, 40, 50). Thus, the first and fourth openings (38) and (52) also overlap with each other. This enables the formation of the air passage (AP) even if the first and third modules (30) and (50) are directly coupled together. As a result, a plurality of modules can be easily combined together. The ventilation apparatus (10) including the first, second, and third modules (30), (40), and (50) and the ventilation apparatus (10) including the first and third modules (30) and (50) can be selectively manufactured.

A second aspect of the present disclosure is an embodiment of the first aspect. The ventilation apparatus according to the second aspect further includes:
a first sealing member (61) and a second sealing member (62), wherein
the first and second casings (31) and (41) are coupled together via the first sealing member (61), and the second and third casings (41) and (51) are coupled together via the second sealing member (62).

According to the second aspect, the first and second sealing members (61) and (62) can fill the gaps between adjacent casings (31, 41, 51). It is thus possible to reduce the leakage of air in the air passage (AP) to the outside when the air passes between the adjacent casings (31, 41, 51).

A third aspect of the present disclosure is an embodiment of the second aspect. In the third aspect,
the first and second sealing members (61) and (62) contain an elastic material,
the first sealing member (61) is fixed by being pressed by the first and second casings (31) and (41), and
the second sealing member (62) is fixed by being pressed by the second and third casings (41) and (51).

According to the third aspect, the first and second sealing members (61) and (62) are pressed by the adjacent casings (31, 41, 51) and brought into tight contact with the adjacent casings (31, 41, 51). It is thus possible to further reduce the leakage of the air flowing through the adjacent casings (31, 41, 51).

A fourth aspect of the present disclosure is an embodiment of the third aspect. The ventilation apparatus according to the fourth aspect further includes:
a fourth casing (12) in which the first, second, and third modules (30), (40), and (50) are disposed, wherein
the fourth casing (12)
fixes the first, second, and third casings (31), (41), and (51) so that the first sealing member (61) is pressed by the first and second casings (31) and (41) and that the second sealing member (62) is pressed by the second and third casings (41) and (51).

According to the fourth aspect, it is possible to keep the sealing members (61, 62) pressed by the fourth casing (12), which makes it possible to fix the first to third casings (31, 41, 51) in the fourth casing (12).

A fifth aspect of the present disclosure is an embodiment of the fourth aspect. In the fifth aspect,
the fourth casing (12) is formed in a rectangular parallelepiped shape, and
the second casing (41) is longer than the first and third casings (31) and (51) in a length in a second direction orthogonal to the first direction.

According to the fifth aspect, the fourth casing (12) is formed in a rectangular parallelepiped shape. Thus, empty spaces adjacent to the first and third modules (30) and (50) are formed in the fourth casing (12). However, the ventilation apparatus (10) that includes the first and third modules (30) and (50) but not the second module (40) can eliminate such empty spaces. As a result, the fourth casing (12) can be compact.

A sixth aspect of the present disclosure is an embodiment of the fifth aspect. In the sixth aspect,
the fourth casing (12) is disposed along a first surface (7), the first surface (7) being a ceiling surface or a wall surface of the room, and
the second direction is orthogonal to the first direction and along the first surface (7).

According to the sixth aspect, the second casing (41) is longer than the first and third casings (31) and (51) in the length in the direction orthogonal to the first direction and along the first surface (7).

A seventh aspect of the present disclosure is an embodiment of the fifth or sixth aspects. In the seventh aspect,
when one of two inner surfaces of the fourth casing (12) facing each other in the second direction is defined as a first inner side surface (12ei),
one end of each of the first, second, and third casings (31), (41), and (51) in the second direction is in contact with the first inner side surface (12ei).

According to the seventh aspect, one end of each of the first to third casings (31, 41, 51) in the second direction can be fixed to the first inner side surface (12ei) of the fourth casing (12).

An eighth aspect of the present disclosure is an embodiment of the seventh aspect. In the eighth aspect,
of the inner surfaces of the fourth casing (12), a second inner side surface (12fi) facing the first inner side surface (12ei) is in contact with another end of the second casing (41) in the second direction.

According to the eighth aspect, the second module (40) can be fixed in the fourth casing (12) by utilizing the first and second inner side surfaces (12ei) and (12fi).

A ninth aspect of the present disclosure is an embodiment of the eighth aspect. The ventilation apparatus according to the ninth aspect further includes:
regulating members (63a, 63b) configured to regulate movements of the first and third casings (31) and (51) in the second direction.

According to the ninth aspect, the first and third modules (30) and (50) can be fixed in the fourth casing (12) by the first inner side surface (12ei) and the regulating members (63a, 63b). As can be seen, the first to third modules (30, 40, 50) can be fixed in the fourth casing (12) using the first and second inner side surfaces (12ei) and (12fi).

A tenth aspect of the present disclosure is an embodiment of any one of the fourth to ninth aspects. In the tenth aspect,
the functional element (25) is a refrigerant heat exchanger (25) configured to allow air flowing through the second module (40) to exchange heat with a refrigerant,
the second module (40) includes a joint (27) configured to connect the refrigerant heat exchanger (25) and a refrigerant pipe (86, 87) together, and
the joint (27) is disposed in
a first space (S1) formed by an inner surface of the fourth casing (12), an outer surface of the first casing (31), and an outer surface of the second casing (41), or
a second space (S2) formed by the inner surface of the fourth casing (12), the outer surface of the second casing (41), and an outer surface of the third casing (51).

According to the tenth aspect, it is possible to dispose the refrigerant pipe (86, 87) connected to the joint (27) in the first space (S1) or the second space (S2). As can be seen, an empty space in the fourth casing (12) can be effectively used.

An eleventh aspect of the present disclosure is directed to a method for assembling a ventilation apparatus according to claim 11.

According to the method for assembling the ventilation apparatus (10) of the eleventh aspect, the ventilation apparatus (10) including the first, second, and third modules (30), (40), and (50) and the ventilation apparatus (10) including the first and third modules (30) and (50) can be selectively manufactured.

### BRIEF DESCRIPTION OF THE DRAWINGS

FIG. 1 is a diagram illustrating a general configuration of a building including a ventilation apparatus according to an embodiment.
FIG. 2 is a diagram illustrating a general configuration of a refrigerant circuit of the ventilation apparatus.
FIG. 3 is a perspective view illustrating the appearance of the ventilation apparatus.
FIG. 4 is a cross section taken along line IV-IV shown in FIG. 3 and viewed in the direction of arrows.
FIG. 5 is a cross section taken along line V-V shown in FIG. 4 and viewed in the direction of arrows.
FIG. 6 is a bottom view of the ventilation apparatus.
FIG. 7 is a bottom view of the ventilation apparatus from which an indoor panel has been detached.
FIG. 8 is a cross section illustrating an internal structure of a second ventilation unit.

### DESCRIPTION OF EMBODIMENTS

### «Embodiments»

Embodiments of the present invention will be described in detail below with reference to the drawings. The present invention is not limited to the embodiments shown below, and various changes can be made within the scope without departing from the scope of the appended claims. Since each of the drawings is intended to illustrate the present disclosure conceptually, dimensions, ratios, or numbers may be exaggerated or simplified as necessary for the sake of ease of understanding.

### (1) Outline of Ventilation Apparatus

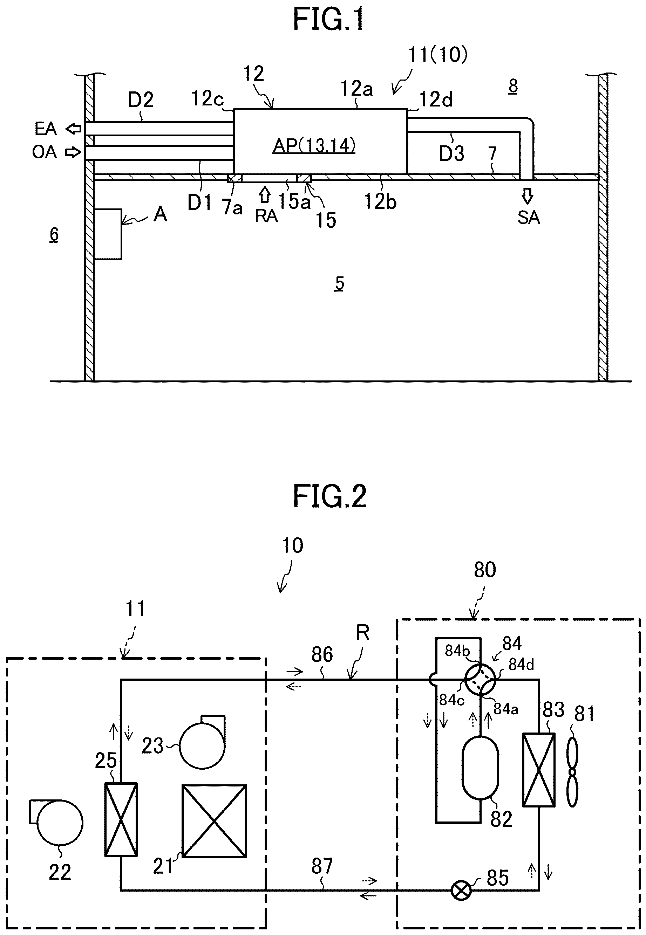

A ventilation apparatus (10) of the present disclosure ventilates an indoor space (5). As illustrated in FIG. 1, the ventilation apparatus (10) ventilates the indoor space (5) in a building, such as an ordinary house. The ventilation apparatus (10) has an air passage (AP). The air passage (AP) includes an air supply path (13) and an exhaust path (14), which will be described later.

The ventilation apparatus (10) supplies outdoor air (OA) in an outdoor space (6), as supply air (SA), into a room. At the same time, the ventilation apparatus (10) exhausts room air (RA) in the indoor space (5), as exhaust air (EA), to the outside of the room. The "indoor space" as used herein includes a habitable room, such as a living room, and a non-habitable room, such as a corridor. The indoor space (5) is a room of the present disclosure. The outdoor space (6) is the outside of the room of the present disclosure. The ventilation apparatus (10) adjusts the temperature of air in the indoor space (5). The ventilation apparatus (10) performs a cooling operation and a heating operation.

### -Ventilation Unit-

The ventilation apparatus (10) has a ventilation unit (11). The ventilation unit (11) of this example is a horizontal ventilation unit. The ventilation unit (11) is disposed in a ceiling space (8) behind the ceiling. The ventilation unit (11) has the air passage (AP). The air passage (AP) includes the air supply path (13) and the exhaust path (14). The air supply path (13) is a passage through which outdoor air (OA) is supplied into the indoor space (5). The exhaust path (14) is a passage through which room air (RA) is exhausted to the outside of the room. The ventilation unit (11) includes an air supply fan (22), an exhaust fan (23), a total heat exchanger (21), and a utilization heat exchanger (25). The ventilation unit (11) will be described in detail later.

### -Duct-

The ventilation unit (11) is connected to an outside air duct (D1), an exhaust duct (D2), and air supply ducts (D3). The inlet end of the outside air duct (D1) communicates with the outdoor space (6). The outlet end of the outside air duct (D1) is joined to the inlet end of the air supply path (13). The inlet end of the exhaust duct (D2) is joined to the outlet end of the exhaust path (14). The outlet end of the exhaust duct (D2) communicates with the outdoor space (6). The inlet ends of the air supply ducts (D3) are joined to the outlet end of the air supply path (13). The outlet ends of the air supply ducts (D3) communicate with the indoor space (5).

### -Heat Source Unit-

As illustrated in FIG. 2, the ventilation apparatus (10) includes a heat source unit (80). The heat source unit (80) and the utilization heat exchanger (25) are connected together through a first connection pipe (86) and a second connection pipe (87). Such connection of the pipes forms a refrigerant circuit (R). The refrigerant circuit (R) is filled with a refrigerant. The refrigerant is, for example, R32 (difluoromethane). The refrigerant circulates in the refrigerant circuit (R) to perform a refrigeration cycle. The first connection pipe (86) is a gas-side connection pipe. The second connection pipe (87) is a liquid-side connection pipe.

The heat source unit (80) is disposed in the outdoor space (6). The heat source unit (80) includes a heat source fan (81). The heat source unit (80) includes a compressor (82), a heat source heat exchanger (83), a switching mechanism (84), and an expansion valve (85) as components of the refrigerant circuit (R).

The compressor (82) compresses sucked refrigerant. The compressor (82) discharges the compressed refrigerant. The compressor (82) is of an inverter type.

The heat source heat exchanger (83) is a fin-and-tube air heat exchanger. The heat source heat exchanger (83) is an outdoor heat exchanger that allows heat exchange between the refrigerant flowing therethrough and outdoor air.

The heat source fan (81) is disposed near the heat source heat exchanger (83). The heat source fan (81) of this example is a propeller fan. The heat source fan (81) transfers air passing through the heat source heat exchanger (83).

The switching mechanism (84) changes the flow path of the refrigerant circuit (R) so as to switch between a first refrigeration cycle which is a cooling cycle and a second refrigeration cycle which is a heating cycle. The switching mechanism (84) is a four-way switching valve. The switching mechanism (84) has a first port (84a), a second port (84b), a third port (84c), and a fourth port (84d). The first port (84a) of the switching mechanism (84) is joined to the discharge portion of the compressor (82). The second port (84b) of the switching mechanism (84) is joined to the suction portion of the compressor (82). The third port (84c) of the switching mechanism (84) is joined to the gas-side end of the utilization heat exchanger (25) through the first connection pipe (86). The fourth port (84d) of the switching mechanism (84) is joined to the gas-side end of the heat source heat exchanger (83).

The switching mechanism (84) switches between a first state and a second state. The switching mechanism (84) in the first state (state indicated by solid lines in FIG. 2) causes the first port (84a) and the fourth port (84d) to communicate with each other, and causes the second port (84b) and the third port (84c) to communicate with each other. The switching mechanism (84) in the second state (state indicated by dashed lines in FIG. 2) causes the first port (84a) and the third port (84c) to communicate with each other, and causes the second port (84b) and the fourth port (84d) to communicate with each other.

The expansion valve (85) has one end joined to the liquid-side end of the heat source heat exchanger (83), and the other end joined to the liquid-side end of the utilization heat exchanger (25) via the second connection pipe (87). The expansion valve (85) is an electronic expansion valve having a variable opening degree.

### (2) Detailed Structure of Ventilation Unit

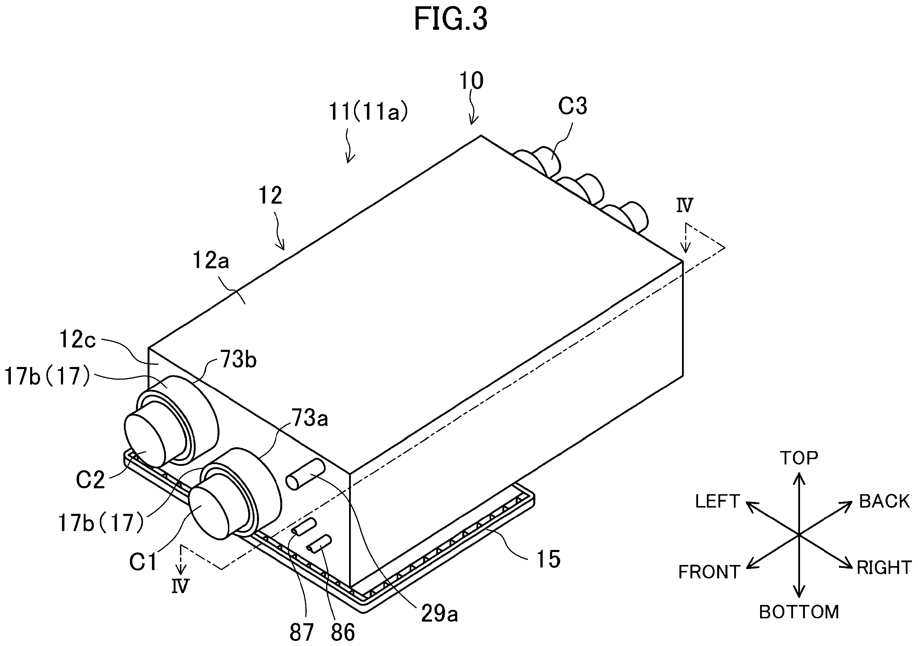

The detailed structure of the ventilation unit (11) will be specifically described. The terms "top," "bottom," "left," "right," "front," and "back" in the following description refer to the directions when the ventilation unit (11) is viewed from the front, as illustrated in FIGS. 3 to 5. The front surface of the ventilation unit (11) is a side surface provided with a first duct joint (C1) and a second duct joint (C2), which will be described later.

As illustrated in FIGS. 3 to 5, the ventilation unit (11) includes a first module (30), a second module (40), a third module (50), and a fourth casing (12). The "modules" as used herein refer to a plurality of parts configured to be able to be handled as one piece.

The first module (30), the second module (40), and the third module (50) are arranged in the fourth casing (12) sequentially from the front toward the back. The direction of arrangement of the first to third modules (30, 40, 50) is a first direction of the present disclosure. The first direction of this example is the front-to-back direction. The direction orthogonal to the first direction is a second direction of the present disclosure. The second direction of this example is the right-to-left direction.

The modules (30, 40, 50) have different functions. Specifically, the first module (30) includes the total heat exchanger (21) and the exhaust fan (23). The second module (40) includes the utilization heat exchanger (25). The third module (50) includes the air supply fan (22). The air passage (AP) is formed from the first module (30) to the third module (50) in the state in which the first, second, third modules (30), (40), and (50) are coupled together.

### (2-1) Fourth Casing

The fourth casing (12) is disposed in the ceiling space (8) (see FIG. 1). The fourth casing (12) extends along a ceiling surface (7). The ceiling surface (7) is a first surface (7) of the present disclosure. The fourth casing (12) is formed in a rectangular parallelepiped shape. The rectangular parallelepiped shape has six faces in total: two facing each other in the top-to-bottom direction; another two facing in the front-to-back direction, and the other two facing in the right-to-left direction. Specifically, the fourth casing (12) has a top plate (12a), a bottom plate (12b), a first side plate (12c), a second side plate (12d), a third side plate (12e), and a fourth side plate (12f). The fourth casing (12) is formed in a hollow box-like shape. In other words, the fourth casing (12) has therein an internal space (16).

The first side plate (12c) forms a front side surface of the fourth casing (12). The first side plate (12c) has one first mounting hole (73a) and one second mounting hole (73b). The first and second mounting holes (73a) and (73b) are arranged in the right-to-left direction. The first mounting hole (73a) is disposed below the second mounting hole (73b).

The second side plate (12d) forms a back side surface of the fourth casing (12). The second side plate (12d) has third mounting holes (73c). The number of the third mounting holes (73c) is five. Tubular duct fixing portions (54) are inserted into the respective third mounting holes (73c). The duct fixing portions (54) protrude backward from the second side plate (12d). The duct fixing portions (54) are provided with associated third duct joints (C3). The third duct joints (C3) are tubular. The third duct joints (C3) are fixed to the inner surfaces of the duct fixing portions (54). The inlet ends of the air supply ducts (D3) are connected to the third duct joints (C3). Note that FIG. 1 illustrates only one of the air supply ducts (D3) for the sake of convenience.

The third side plate (12e) forms a left side surface of the fourth casing (12). The inner side surface of the third side plate (12e) is referred to as the "first inner side surface (12ei)." The first inner side surface (12ei) is one of the two inner surfaces of the fourth casing (12) that face each other in the right-to-left direction.

The fourth side plate (12f) forms a right side surface of the fourth casing (12). The inner side surface of the fourth side plate (12f) is referred to as the "second inner side surface (12fi)." The second inner side surface (12fi) is one of the inner surfaces of the fourth casing (12) that faces the first inner side surface (12ei) of the third side plate (12e).

The top plate (12a) forms an upper surface of the fourth casing (12). The bottom plate (12b) forms a lower surface of the fourth casing (12).

The bottom plate (12b) extends from the lower end of the second side plate (12d) to a back side surface of a first casing (31), which will be described later.

A duct fixing member (17) is provided in the fourth casing (12). The duct fixing member (17) is a member for fixing the first and second duct joints (C1) and (C2). The duct fixing member (17) is disposed at the front end of the internal space (16). The duct fixing member (17) is disposed closer to the left side of the internal space (16). The duct fixing member (17) includes a body portion (17a) having a rectangular parallelepiped shape, and two tubular portions (17b, 17b) passing through the body portion (17a).

The body portion (17a) is positioned to be in contact with the inner surface of the first side plate (12c) and the front side surface of the first casing (31), which will be described later. The left side surface of the body portion (17a) is in contact with the inner side surface (first inner side surface (12ei)) of the third side plate (12e).

One of the two tubular portions (17b) is inserted into the first mounting hole (73a) of the third side plate (12e), and the other is inserted into the second mounting hole (73b) of the third side plate (12e). The first duct joint (C1) is fixed to the inner surface of the tubular portion (17b) inserted into the first mounting hole (73a). The second duct joint (C2) is fixed to the inner surface of the tubular portion (17b) inserted into the second mounting hole (73b).

The first and second duct joints (C1) and (C2) are tubular. The first and second duct joints (C1) and (C2) protrude forward from the associated tubular portions (17b). The outlet end of the outside air duct (D1) is connected to the first duct joint (C1). The inlet end of the exhaust duct (D2) is connected to the second duct joint (C2).

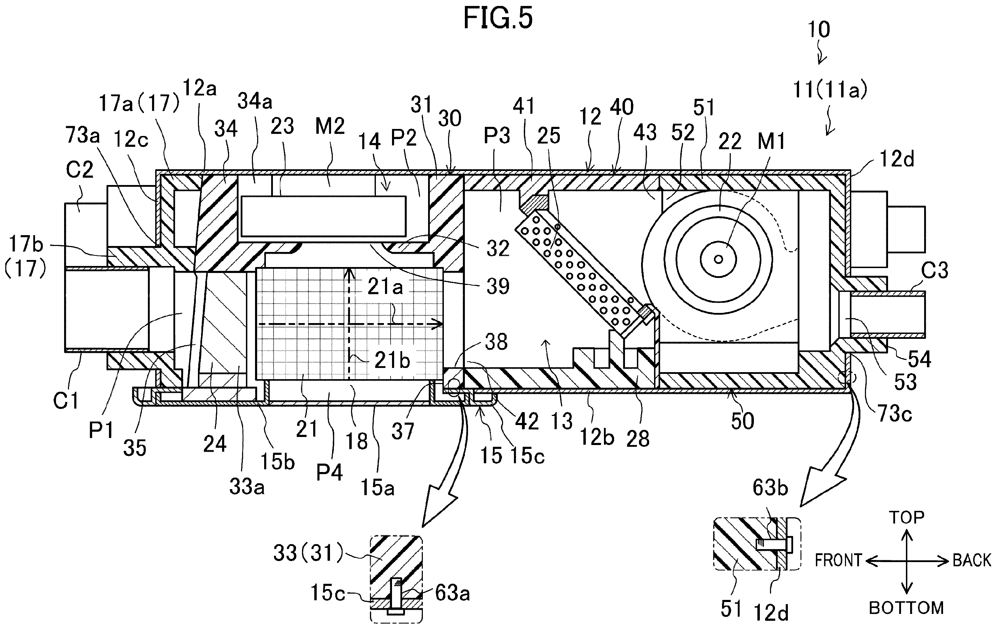

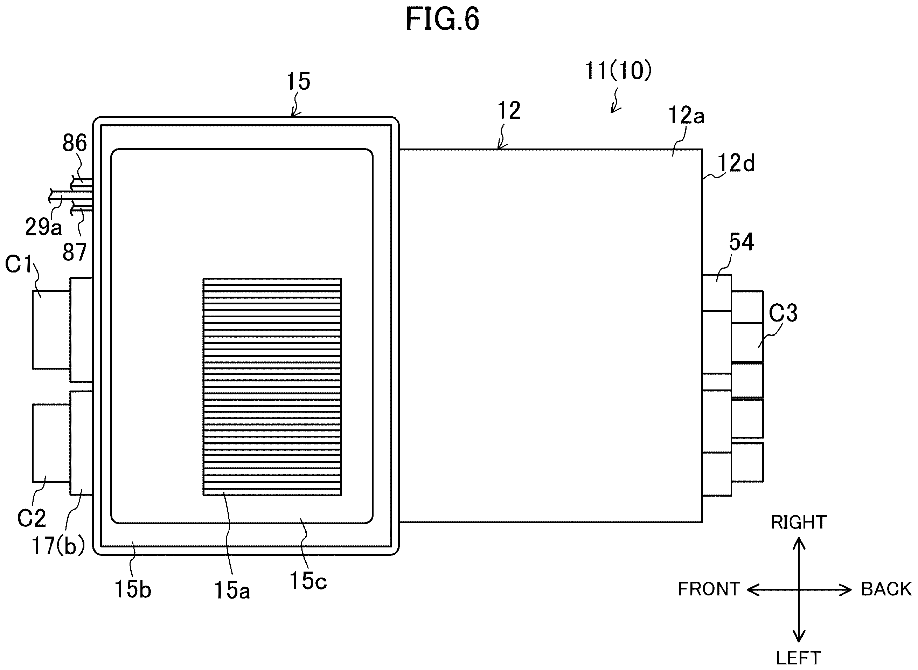

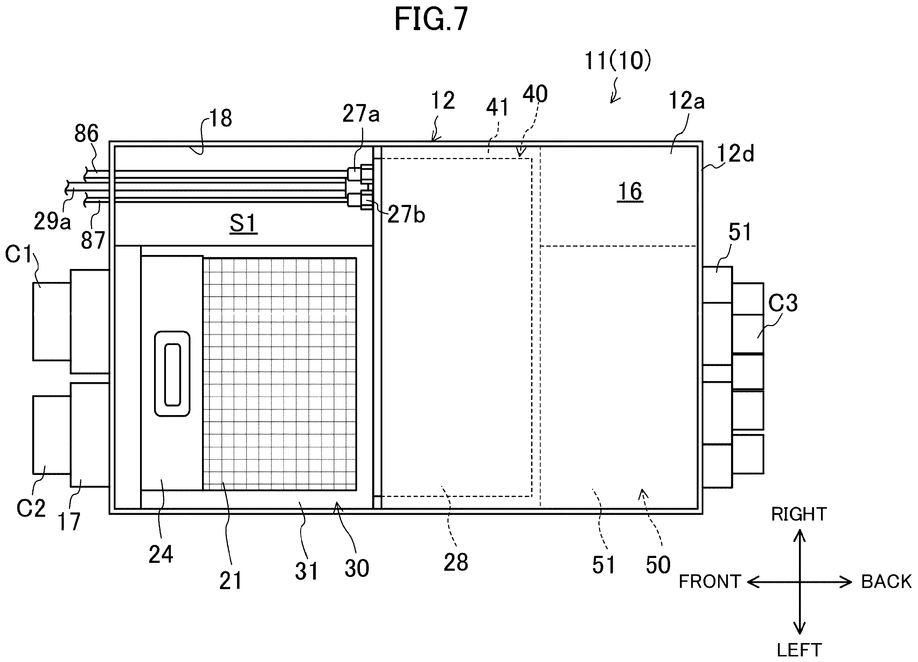

As illustrated in FIGS. 5 to 7, the lower surface of the fourth casing (12) has an access hole (18). The access hole (18) is formed in front of the bottom plate (12b). The access hole (18) communicates with the internal space (16) of the fourth casing (12). An indoor panel (15) is provided below the access hole (18).

The indoor panel (15) covers the access hole (18). As schematically illustrated in FIG. 1, the indoor panel (15) is provided inside an opening (7a) that passes through the ceiling surface (7). The indoor panel (15) faces the indoor space (5). The indoor panel (15) includes a flat plate part (15b) and a frame part (15c). The flat plate part (15b) closes the access hole (18). The frame part (15c) is a frame surrounding the flat plate part (15b). The indoor panel (15) is removable.

The flat plate part (15b) of the indoor panel (15) has an inlet (15a). The inlet (15a) is included in the access hole (18). In other words, a portion of the access hole (18) forms the inlet (15a). The inlet (15a) sucks room air. The inlet (15a) allows the indoor space (5) and the inlet end of the exhaust path (14) to communicate with each other.

### (2-2) First Module

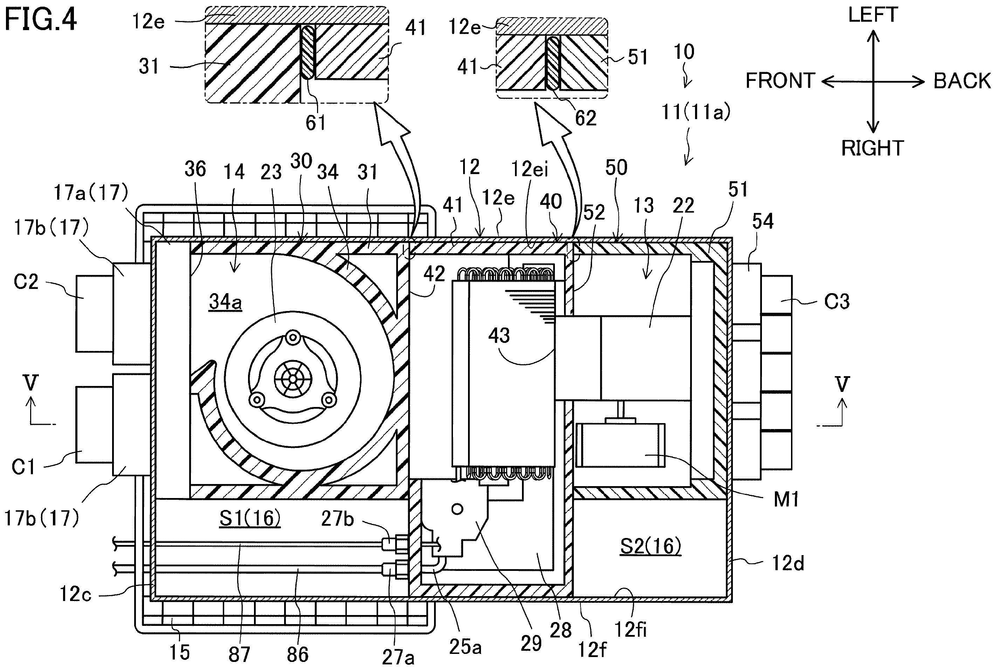

As illustrated in FIGS. 4 and 5, the first module (30) includes the first casing (31), the total heat exchanger (21), the exhaust fan (23), and a filter (24).

### -First Casing-

The first casing (31) is disposed in a front portion of the fourth casing (12). The first casing (31) is disposed above the access hole (18). The first casing (31) is formed in a rectangular parallelepiped shape. The first casing (31) is made of styrene foam. The upper surface of the first casing (31) is in contact with the top plate (12a) of the fourth casing (12). The lower surface of the first casing (31) is in contact with the bottom plate (12b) of the fourth casing (12). The left side surface of the first casing (31) is in contact with the inner side surface (first inner side surface (12ei)) of the third side plate (12e) of the fourth casing (12). The left side surface of the first casing (31) is one end of the first casing (31) in the right-to-left direction according to the present disclosure. A first space (S1) is formed between the right side surface of the first casing (31) and the fourth side plate (12f) of the fourth casing (12).

The first space (S1) is formed in the internal space (16). The first space (S1) is a space surrounded by the inner surface of the fourth casing (12), the outer surface of the first casing (31), and the outer surface of a second casing (41). Strictly speaking, the first space (S1) is a space surrounded by the first side plate (12c), the fourth side plate (12f), the top plate (12a), the right side surface of the duct fixing member (17), the right side surface of the first casing (31), the front side surface of the second casing (41) to be described later, and the indoor panel (15).

A first fastening member (63a) that fastens the first casing (31) and the frame part (15c) together is provided at the lower end of the back side surface of the first casing (31) (see a partially enlarged view in FIG. 5). The first fastening member (63a) is a regulating member (63a) of the present disclosure. The first fastening member (63a) is, for example, a bolt. The first fastening member (63a) is inserted into the frame part (15c) and the first casing (31) in this order. As can be seen, the first fastening member (63a) regulates the movement of the first casing (31) in the right-to-left direction (toward the right in this example).

Upper and lower portions of the first casing (31) are open. The first casing (31) includes a partitioning portion (32), a total heat exchanger containing portion (33), and a housing portion (34).

The partitioning portion (32) is a plate-shaped portion above the center of the first casing (31) in the top-to-bottom direction. The partitioning portion (32) partitions the internal space of the first casing (31) in the fourth casing (12) into a total heat exchanger-containing space (33a) and a fan-containing space (34a).

The total heat exchanger-containing space (33a) is formed below the partitioning portion (32). The total heat exchanger-containing space (33a) is surrounded by the total heat exchanger containing portion (33) and the indoor panel (15). The total heat exchanger containing portion (33) has a box shape. The total heat exchanger (21) and the filter (24) are disposed in the total heat exchanger-containing space (33a).

The fan-containing space (34a) is formed above the partitioning portion (32). The fan-containing space (34a) is surrounded by the housing portion (34) and the top plate (12a) of the fourth casing (12). As illustrated in FIG. 4, the housing portion (34) has an arc shape to surround the exhaust fan (23) in top view. The housing portion (34) extends upward from the partitioning portion (32). The exhaust fan (23) is disposed in the fan-containing space (34a).

The front side surface of the first casing (31) has a first inflow port (35) and a first outflow port (36), which are substantially rectangular. The first inflow port (35) communicates with the total heat exchanger-containing space (33a). The first inflow port (35) communicates with the first duct joint (C1) via the duct fixing member (17). A flow path from the inlet end of the first duct joint (C1) via the first inflow port (35) to the front side surface of the total heat exchanger (21) forms a first flow path (P1). The first flow path (P1) forms a portion of the air supply path (13) located upstream of the total heat exchanger (21).

The first outflow port (36) communicates with the fan-containing space (34a). The first outflow port (36) communicates with the second duct joint (C2) via the duct fixing member (17). The partitioning portion (32) has a substantially circular communication port (39). The communication port (39) is formed above the total heat exchanger (21). The communication port (39) allows the total heat exchanger-containing space (33a) and the fan-containing space (34a) to communicate with each other.

A flow path from the outlet end of the second duct joint (C2) via the first outflow port (36) and the communication port (39) to the upper surface of the total heat exchanger (21) forms a second flow path (P2). The second flow path (P2) forms a portion of the exhaust path (14) located downstream of the total heat exchanger (21).

A first opening (38) is formed in the back side surface of the first casing (31). The first opening (38) is substantially rectangular. The first opening (38) communicates with the total heat exchanger-containing space (33a). A flow path from the back side surface of the total heat exchanger (21) via the first opening (38) to the inlet ends of the third duct joints (C3) forms a third flow path (P3). The third flow path (P3) forms a portion of the air supply path (13) located downstream of the total heat exchanger (21).

The lower side of the first casing (31) has a substantially rectangular second inflow port (37). The second inflow port (37) communicates with the total heat exchanger-containing space (33a). The second inflow port (37) is formed above the access hole (18) of the fourth casing (12). A flow path from the inlet (15a) of the indoor panel (15) via the second inflow port (37) to the lower surface of the total heat exchanger (21) forms a fourth flow path (P4). The fourth flow path (P4) forms a portion of the exhaust path (14) located upstream of the total heat exchanger (21).

### -Total Heat Exchanger-

The total heat exchanger (21) corresponds to a first heat exchanger of the present disclosure. The total heat exchanger (21) is housed in the first casing (31). Specifically, the total heat exchanger (21) is disposed in the total heat exchanger-containing space (33a). The total heat exchanger (21) allows heat exchange between the air flowing through the air supply path (13) and the air flowing through the exhaust path (14). The total heat exchanger (21) has therein an air supply internal flow path (21a) and an exhaust internal flow path (21b). The air supply internal flow path (21a) and the exhaust internal flow path (21b) are orthogonal to each other.

An inflow portion of the air supply internal flow path (21a) is joined to the first flow path (P1). An outflow portion of the air supply internal flow path (21a) is joined to the third flow path (P3). As can be seen, the air supply path (13) includes the first flow path (P1), the air supply internal flow path (21a), and the third flow path (P3).

An inflow portion of the exhaust internal flow path (21b) is joined to the fourth flow path (P4). An outflow portion of the exhaust internal flow path (21b) is joined to the second flow path (P2). As can be seen, the exhaust path (14) includes the fourth flow path (P4), the exhaust internal flow path (21b), and the second flow path (P2).

The total heat exchanger (21) transfers heat between air in the air supply internal flow path (21a) and air in the exhaust internal flow path (21b). The total heat exchanger (21) transfers moisture between air in the air supply internal flow path (21a) and air in the exhaust internal flow path (21b). As can be seen, the total heat exchanger (21) transfers latent heat and sensible heat between the air in the air supply internal flow path (21a) and the air in the exhaust internal flow path (21b).

The total heat exchanger (21) is placed such that the inflow surface of the exhaust internal flow path (21b) lies along the opening surface of the inlet (15a). In other words, the air flowing through the exhaust internal flow path (21b) flows in a substantially vertical direction. The air flowing through the exhaust internal flow path (21b) flows upward from the bottom. The air flowing through the air supply internal flow path (21a) flows in a substantially horizontal direction. The air flowing through the air supply internal flow path (21a) flows backward from the front.

### -Exhaust Fan-

The exhaust fan (23) is disposed in the second flow path (P2). The exhaust fan (23) is housed in the fan-containing space (34a) of the first casing (31). The exhaust fan (23) transfers air in the exhaust path (14). The exhaust fan (23) is a sirocco fan. The exhaust fan (23) may be a turbo fan or a propeller fan.

The exhaust fan (23) is driven by a second motor (M2). The number of revolutions of the second motor (M2) is variable. The second motor (M2) is a DC fan motor, the number of revolutions of which is adjustable. The exhaust fan (23) is configured such that its volume of air is variable.

The second motor (M2) is fixed to a front portion, in the front-to-back direction, of the top plate (12a) of the fourth casing (12). In other words, the second motor (M2) is fixed to an upper portion of the first casing (31). The exhaust fan (23) is disposed below the second motor (M2).

### -Filter-

The ventilation unit (11) includes the filter (24). The filter (24) is disposed in the first flow path (P1). The filter (24) is disposed upstream of the total heat exchanger (21) in the air supply path (13). The filter (24) is disposed between the first inflow port (35) and the total heat exchanger (21) in the first casing (31). The filter (24) collects dust in outdoor air (OA). The fourth flow path (P4) may include a filter.

### (2-3) Second Module

The second module (40) includes the second casing (41), the utilization heat exchanger (25), a drain pan (28), a pump (29), and refrigerant pipe joints (27).

### -Second Casing-

The second casing (41) is housed in the fourth casing (12). The second casing (41) is located adjacent to and behind the first casing (31). The second casing (41) is disposed in a central portion of the fourth casing (12).

The second casing (41) is formed in a rectangular parallelepiped shape. The second casing (41) is made of resin. The second casing (41) has a greater length in the right-to-left direction than the first casing (31) does. The second casing (41) has a greater length in the right-to-left direction than a third casing (51) to be described later does. The second casing (41) has generally the same length in the right-to-left direction as that of the internal space (16) of the fourth casing (12). In other words, the length of the fourth casing (12) in the right-to-left direction is determined based on the length of the second casing (41) in the right-to-left direction.

Specifically, the front side surface of the second casing (41) is in contact with the back side surface of the first casing (31) with a first sealing member (61) to be described later interposed therebetween. The upper surface of the second casing (41) is in contact with the top plate (12a) of the fourth casing (12). The lower surface of the second casing (41) is in contact with the bottom plate (12b) of the fourth casing (12).

The left side surface of the second casing (41) is in contact with the inner side surface (first inner side surface (12ei)) of the third side plate (12e) of the fourth casing (12). The left side surface of the second casing (41) is one end of the second casing (41) in the right-to-left direction according to the present disclosure. The right side surface of the second casing (41) is in contact with the inner side surface (second inner side surface (12fi)) of the fourth side plate (12f) of the fourth casing (12). The right side surface of the second casing (41) is the other end of the second casing (41) in the right-to-left direction according to the present disclosure. As can be seen, the third side plate (12e) and the fourth side plate (12f) regulate the movement of the second casing (41) in the right-to-left direction.

The lower surface of the second casing (41) is open. The utilization heat exchanger (25) is disposed in a left portion of the second casing (41).

A second opening (42) is formed in the front side surface of the second casing (41). The second opening (42) is substantially rectangular. The second opening (42) is formed in front of the utilization heat exchanger (25). The second opening (42) is positioned to correspond to the first opening (38) of the first casing (31). Specifically, the second opening (42) is formed to overlap with the first opening (38). More specifically, the second opening (42) is formed to be a size larger than the first opening (38) so that a portion of the second opening (42) overlaps with the first opening (38). Accordingly, the internal space of the second casing (41) and the total heat exchanger-containing space (33a) communicate with each other.

A third opening (43) is formed in the back side surface of the second casing (41). The third opening (43) is formed behind the utilization heat exchanger (25). The third opening (43) is formed to overlap with the first opening (38) and the second opening (42) as viewed from the front-to-back direction. In other words, the second opening (42) and the third opening (43) overlap with each other as viewed from the front-to-back direction. The first opening (38) and the third opening (43) also overlap with each other as viewed from the front-to-back direction. A flow path from the second opening (42) to the third opening (43) of the second casing (41) forms a portion of the third flow path (P3).

### -Utilization Heat Exchanger-

The utilization heat exchanger (25) is a functional element (25) of the present disclosure that treats air. The utilization heat exchanger (25) is a refrigerant heat exchanger (25) of the present disclosure. The utilization heat exchanger (25) is disposed in the third flow path (P3). The utilization heat exchanger (25) is disposed downstream of the total heat exchanger (21) in the air supply path (13).

The utilization heat exchanger (25) is provided in the internal space of the second casing (41) and extends in the right-to-left direction and in the top-to-bottom direction. The utilization heat exchanger (25) is inclined downward and backward. The utilization heat exchanger (25) is inclined 45 degrees relative to the vertical direction. The upper end of the utilization heat exchanger (25) is supported by the upper surface of the second casing (41). The lower end of the utilization heat exchanger (25) is supported by the drain pan (28).

The utilization heat exchanger (25) allows the air flowing through the second casing (41) to exchange heat with the refrigerant. The utilization heat exchanger (25) is a fin-and-tube air heat exchanger. The utilization heat exchanger (25) includes a large number of fins and a heat transfer tube (25a). The heat transfer tube (25a) extends in the direction of arrangement of the large number of fins. The refrigerant flows through the heat transfer tube (25a).

The utilization heat exchanger (25) functions as an evaporator in the cooling operation. The utilization heat exchanger (25) functions as a radiator (strictly speaking, a condenser) in the heating operation.

### -Refrigerant Pipe Joint-

The refrigerant pipe joints (27) are connectors that each connect the utilization heat exchanger (25) and the associated connection pipe (86, 87) together. The refrigerant pipe joints (27) are joints (27) of the present disclosure. The connection pipes (86, 87) are refrigerant pipes (86, 87) of the present disclosure. The refrigerant pipe joints (27) are disposed in the first space (S1). Specifically, the ventilation unit (11) includes a first refrigerant pipe joint (27a) and a second refrigerant pipe joint (27b). The first refrigerant pipe joint (27a) connects the first connection pipe (86) and the heat transfer tube (25a) together. The second refrigerant pipe joint (27b) connects the second connection pipe (87) and the heat transfer tube (25a) together. The first and second refrigerant pipe joints (27a) and (27b) are fixed to a right portion of the front side surface of the second casing (41). The first and second refrigerant pipe joints (27a) and (27b) are arranged to protrude forward from the front side surface of the second casing (41). The first and second refrigerant pipe joints (27a) and (27b) pass through, and are fixed to, the front side surface of the second casing (41).

### -Drain Pan-

The drain pan (28) is disposed above the bottom plate (12b) of the fourth casing (12). The drain pan (28) is placed on the bottom plate (12b) of the fourth casing (12) (see FIG. 5). The drain pan (28) is disposed below the utilization heat exchanger (25). The drain pan (28) is disposed in a lower portion of the second casing (41). The drain pan (28) closes the lower side of the second casing (41). The drain pan (28) has a dish shape with its upper end open. The drain pan (28) receives condensed water generated around the utilization heat exchanger (25).

### -Pump-

The pump (29) is disposed above the drain pan (28). The pump (29) is disposed on the right side of the utilization heat exchanger (25). A drainpipe (29a) is connected to an upper portion of the pump (29). Operation of the pump (29) causes water in the drain pan (28) to be sucked into the pump (29) and drained out of the fourth casing (12) through the drainpipe (29a).

### (2-4) Third Module

The third module (50) includes the third casing (51) and the air supply fan (22).

### -Third Casing-

The third casing (51) is located adjacent to and behind the second casing (41). The third casing (51) is disposed in a back portion of the fourth casing (12).

The third casing (51) is formed in a rectangular parallelepiped shape. The third casing (51) is made of styrene foam. The length of the third casing (51) in the right-to-left direction is substantially equal to that of the first casing (31) in the right-to-left direction.

The front side surface of the third casing (51) is in contact with the back side surface of the second casing (41) with a second sealing member (62) to be described later interposed therebetween. The upper surface of the third casing (51) is in contact with the top plate (12a) of the fourth casing (12). The lower surface of the third casing (51) is in contact with the bottom plate (12b) of the fourth casing (12). The left side surface of the third casing (51) is in contact with the inner side surface (first inner side surface (12ei)) of the third side plate (12e) of the fourth casing (12).

The left side surface of the third casing (51) is one end of the third casing (51) in the right-to-left direction according to the present disclosure. The back side surface of the third casing (51) is in contact with the second side plate (12d) of the fourth casing (12). A second space (S2) is formed between the right side surface of the third casing (51) and the fourth side plate (12f) of the fourth casing (12).

The second space (S2) is formed in the internal space (16). The second space (S2) is a space surrounded by the inner surface of the fourth casing (12), the outer surface of the second casing (41), and the outer surface of the third casing (51). Strictly speaking, the second space (S2) is a space surrounded by the second side plate (12d), the fourth side plate (12f), the top plate (12a), the bottom plate (12b), the right side surface of the third casing (51), and the back side surface of the second casing (41). The length of the second space (S2) in the right-to-left direction is substantially equal to that of the first space (S1) in the right-to-left direction.

A second fastening member (63b) that fastens the third casing (51) and the second side plate (12d) together is provided at the lower end of the back side surface of the third casing (51) (see a partially enlarged view in FIG. 5). The second fastening member (63b) is a regulating member (63b) of the present disclosure. The second fastening member (63b) is, for example, a bolt. The second fastening member (63b) is inserted into the second side plate (12d) and the third casing (51) in this order from the back of the fourth casing (12). As can be seen, the second fastening member (63b) regulates the movement of the third casing (51) in the right-to-left direction (toward the right in this example).

Outflow ports (53) are formed in the back side surface of the third casing (51). Specifically, each outflow port (53) is inside the associated tubular duct fixing portion (54) that passes through the back side surface of the third casing (51). The number of the duct fixing portions (54) is five.

The duct fixing portions (54) are inserted into the associated third mounting holes (73c) with the third module (50) disposed in the fourth casing (12). The duct fixing portions (54) protrude backward from the second side plate (12d). The third duct joints (C3) are fixed to the associated duct fixing portions (54). A flow path from the fourth opening (52) of the third casing (51) to the inlet ends of the third duct joints (C3) forms a portion of the third flow path (P3).

A fourth opening (52) is formed in the front side surface of the third casing (51). The fourth opening (52) is substantially rectangular. The fourth opening (52) is positioned to correspond to the third opening (43) of the second casing (41). Specifically, the fourth opening (52) is formed to overlap with the third opening (43) as viewed from the front-to-back direction. More specifically, the fourth opening (52) is formed to be a size smaller than the third opening (43) to overlap with a portion of the third opening (43). The fourth opening (52) is formed to overlap also with the first opening (38) when the first to third modules (30, 40, 50) are viewed from the front-to-back direction. In addition, the fourth opening (52) is formed to overlap also with the second opening (42) when the first to third modules (30, 40, 50) are viewed from the front-to-back direction.

### -Air Supply Fan-

The air supply fan (22) is a fan (22) of the present disclosure. The air supply fan (22) is disposed in the third flow path (P3). The air supply fan (22) transfers air in the air supply path (13). The air supply fan (22) is a sirocco fan. The air supply fan (22) may be a turbo fan or a propeller fan.

The air supply fan (22) is driven by a first motor (M1). The number of revolutions of the first motor (M1) is variable. The first motor (M1) is a direct-current (DC) fan motor, the number of revolutions of which is adjustable. The air supply fan (22) is configured such that its volume of air is variable. The air supply fan (22) is fixed to the third casing (51) via a housing.

### (3) Sealing Member

The ventilation unit (11) includes the first and second sealing members (61) and (62) (see partially enlarged views in FIG. 4). The first and second sealing members (61) and (62) contain an elastic material. The first and second sealing members (61) and (62) contain, for example, a resin material.

The first sealing member (61) is provided between the first casing (31) and the second casing (41). Specifically, the first sealing member (61) is arranged at a portion where the back side surface of the first casing (31) and the front side surface of the second casing (41) overlap with each other. In other words, the first sealing member (61) is provided on the periphery of the first opening (38) and on the periphery of the second opening (42). As can be seen, the first and second casings (31) and (41) are coupled together via the first sealing member (61).

The second sealing member (62) is provided between the second casing (41) and the third casing (51). Specifically, the second sealing member (62) is arranged at a portion where the back side surface of the second casing (41) and the front side surface of the third casing (51) overlap with each other. In other words, the second sealing member (62) is provided on the periphery of the third opening (43) and on the periphery of the fourth opening (52). As can be seen, the second and third casings (41) and (51) are coupled together via the second sealing member (62).

The first sealing member (61) is fixed by being pressed by the first and second casings (31) and (41). The second sealing member (62) is fixed by being pressed by the second and third casings (41) and (51). Specifically, the length from the inner surface of the first side plate (12c) to the inner surface of the second side plate (12d) of the fourth casing (12) is substantially equal to the sum of the lengths of the duct fixing member (17), the first casing (31), the second casing (41), and the third casing (51) in the front-to-back direction. Thus, in the state in which the first to third modules (30, 40, 50) and the duct fixing member (17) are housed in the fourth casing (12), the first sealing member (61) is pressed by the first and second casings (31) and (41). Likewise, the second sealing member (62) is pressed by the second and third casings (41) and (51). In the foregoing manner, the first, second, and third casings (31), (41), and (51) are fixed by a force acting inward in the front-to-back direction of the fourth casing (12).

### (4) Operation

Operation of the ventilation apparatus (10) will be described with reference to FIG. 2. The ventilation apparatus (10) switchably performs the cooling operation and the heating operation. In FIG. 2, the flow of the refrigerant in the cooling operation is indicated by solid arrows, and the flow of the refrigerant in the heating operation is indicated by dashed arrows.

### (4-1) Cooling Operation

In the cooling operation, the compressor (82) and the heat source fan (81) operate; the switching mechanism (84) is in the first state; and the opening degree of the expansion valve (85) is adjusted. In addition, in the cooling operation, the air supply fan (22) and the exhaust fan (23) operate.

In the cooling operation, the refrigerant circuit (R) performs the first refrigeration cycle. In the first refrigeration cycle, the heat source heat exchanger (83) functions as a radiator, and the utilization heat exchanger (25) functions as an evaporator.

In the ventilation unit (11) during the cooling operation, operation of the exhaust fan (23) causes room air (RA) to be taken into the fourth flow path (P4). Operation of the air supply fan (22) causes outdoor air (OA) to be taken into the first flow path (P1). The air in the first flow path (P1) flows through the air supply internal flow path (21a) of the total heat exchanger (21). The air in the fourth flow path (P4) flows through the exhaust internal flow path (21b) of the total heat exchanger (21).

For example, in summer, the indoor space (5) is cooled by another air conditioner (A) illustrated in FIG. 1. In this case, the room air (RA) has a lower temperature than the outdoor air (OA) does. In addition, the room air (RA) has a lower humidity than the outdoor air (OA) does. Thus, in the total heat exchanger (21), the air in the air supply internal flow path (21a) is cooled by the air in the exhaust internal flow path (21b). At the same time, the total heat exchanger (21) transfers moisture in the air in the air supply internal flow path (21a) to the air in the exhaust internal flow path (21b).

The air that has flowed out of the exhaust internal flow path (21b) into the second flow path (P2) flows through the exhaust duct (D2), and is exhausted to the outdoor space (6) as the exhaust air (EA).

The air cooled and dehumidified in the air supply internal flow path (21a) flows out into the third flow path (P3). This air is cooled by the utilization heat exchanger (25). The cooled air flows through the air supply ducts (D3), and is supplied to the indoor space (5) as the supply air (SA).

### (4-2) Heating Operation

In the heating operation, the compressor (82) and the heat source fan (81) operate; the switching mechanism (84) is in the second state; and the opening degree of the expansion valve (85) is adjusted. In addition, in the heating operation, the air supply fan (22) and the exhaust fan (23) operate.

In the heating operation, the refrigerant circuit (R) performs the second refrigeration cycle. In the second refrigeration cycle, the utilization heat exchanger (25) functions as a radiator, and the heat source heat exchanger (83) functions as an evaporator.

For example, in winter, the indoor space (5) is heated by another air conditioner (A) illustrated in FIG. 1. In this case, the room air (RA) has a higher temperature than the outdoor air (OA) does. In addition, the room air (RA) has a higher humidity than the outdoor air (OA) does. Thus, in the total heat exchanger (21), the air in the air supply internal flow path (21a) is heated by the air in the exhaust internal flow path (21b). At the same time, the total heat exchanger (21) transfers moisture in the air in the exhaust internal flow path (21b) to the air in the air supply internal flow path (21a).

The air that has flowed out of the exhaust internal flow path (21b) into the second flow path (P2) flows through the exhaust duct (D2), and is exhausted to the outdoor space (6) as the exhaust air (EA).

The air heated and humidified in the air supply internal flow path (21a) flows out into the third flow path (P3). This air is heated by the utilization heat exchanger (25). The heated air flows through the air supply ducts (D3), and is supplied to the indoor space (5) as the supply air (SA).

### <Method for Assembling Ventilation Apparatus of Present Disclosure>

Next, a method for assembling the ventilation apparatus (10) of the present disclosure will be described. Strictly speaking, a method for assembling the ventilation unit (11) will be described.

The assembling method of this example is a method for assembling a first ventilation unit (11a) and a second ventilation unit (11b) selectively. The first ventilation unit (11a) includes the total heat exchanger (21), the utilization heat exchanger (25), and the air supply fan (22). Specifically, the first ventilation unit (11a) includes the first module (30), the second module (40), and the third module (50). The first ventilation unit (11a) is the same as the ventilation unit (11) described above. The first ventilation unit (11a) is the same as the ventilation unit (11) illustrated in FIGS. 3 to 7 and is therefore not illustrated.

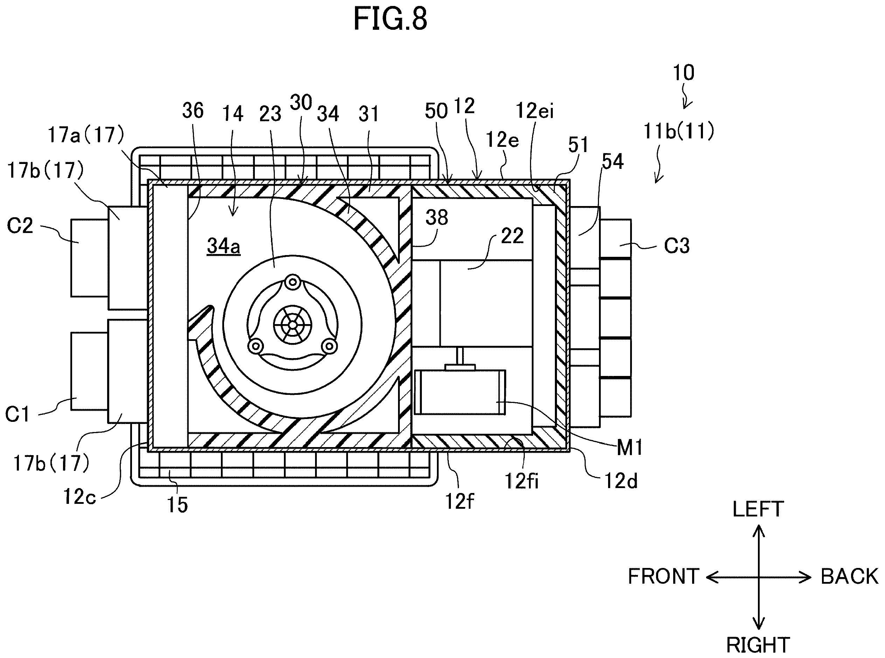

FIG. 8 is a cross-sectional view of an internal structure of the second ventilation unit (11b). FIG. 8 corresponds to the cross-sectional view of the internal structure of the first ventilation unit (11a) illustrated in FIG. 5. As illustrated in FIG. 8, the second ventilation unit (11b) includes the total heat exchanger (21) and the air supply fan (22). The second ventilation unit (11b) does not include the utilization heat exchanger (25) serving as a functional element. Specifically, the second ventilation unit (11b) includes the first module (30) and the third module (50), and does not include the second module (40).

According to the assembling method of this example, in assembling the ventilation apparatus (10) having the first ventilation unit (11a) using the first, second, and third modules (30), (40), and (50), the first, second, and third modules (30), (40), and (50) are sequentially coupled together. In assembling the ventilation apparatus (10) having the second ventilation unit (11b) using the first and third modules (30) and (50), the first and third modules (30) and (50) are coupled together.

In assembling the first ventilation unit (11a), the modules (30, 40, 50) (the casings (31, 41, 51)) are arranged such that the first and second openings (38) and (42) overlap with each other and that the third and fourth openings (43) and (52) overlap with each other. For example, the left side surfaces of the casings (31, 41, 51) are positioned to be in contact with the third side plate (12e) (specifically, the first inner side surface (12ei)) of the fourth casing (12). This allows the formation of the air passage (AP) (strictly speaking, the air supply path (13)) from the first module (30) to the third module (50).

In assembling the second ventilation unit (11b), the first and third modules (30) and (50) are directly coupled together such that the first and fourth openings (38) and (52) overlap with each other. In other words, the first and third casings (31) and (51) are arranged adjacent to each other. This allows the formation of the air passage (AP) (strictly speaking, the air supply path (13)) between the first module (30) and the third module (50).

The first and third casings (31) and (51) of the second ventilation unit (11b) are arranged to be in contact with the third and fourth side plates (12e) and (12f) of the fourth casing (12). Specifically, the left side surfaces of the first and third casings (31) and (51) are in contact with the first inner side surface (12ei), and the right side surfaces of the first and third casings (31) and (51) are in contact with the second inner side surface (12fi).

Thus, the fourth casing (12) of the second ventilation unit (11b) is shorter than the fourth casing (12) of the first ventilation unit (11a) in the lengths in the right-to-left direction and the front-to-back direction. The first space (S1) and the second space (S2) are not formed in the fourth casing (12) of the second ventilation unit (11b).

### -Advantages of Embodiment-

In the ventilation apparatus (10) of the embodiment, in a state in which the first, second, and third modules (30), (40), and (50) are sequentially coupled together, the first, second, third, and fourth openings (38), (42), (43), and (52) overlap with one another as viewed from the front-to-back direction (first direction), which is the direction of arrangement of the first, second, and third modules (30), (40), and (50), so that the air passage (AP) is formed from the first module (30) to the third module (50).

The first, second, third, and fourth openings (38), (42), (43), and (52) at least partially overlap with one another. Thus, the first and fourth openings (38) and (52) also overlap with each other when the first to third modules (30, 40, 50) are viewed from the front-to-back direction. This enables the formation of the air supply path (13) (the air passage (AP)) even if the first module (30) and the third module (50) are directly coupled together. As a result, it is possible to provide a ventilation apparatus (10) that includes the first and third modules (30) and (50) but not the second module (40).

In addition, the ventilation apparatus (10) including the first to third modules (30, 40, 50) and the ventilation apparatus (10) including the first and third modules (30) and (50) can be selectively provided.

In the ventilation apparatus (10) of the embodiment, the first and second casings (31) and (41) are coupled together via the first sealing member (61), and the second and third casings (41) and (51) are coupled together via the second sealing member (62).

This allows the first and second sealing members (61) and (62) to fill the gaps between adjacent casings (31, 41, 51). As a result, the air in the air supply path (13) can be kept from leaking from the gaps between the adjacent casings (31, 41, 51). In addition, it is possible to reduce the condensation in the fourth casing (12) due to cooling of the fourth casing (12) by the leakage of the air cooled by the utilization heat exchanger (25).

In the ventilation apparatus (10) of the embodiment, the first and second sealing members (61) and (62) contain an elastic material. The first sealing member (61) is fixed by being pressed by the first and second casings (31) and (41), and the second sealing member (62) is fixed by being pressed by the second and third casings (41) and (51).

The first sealing member (61) and the second sealing member (62) are thus pressed by the adjacent casings (31, 41, 51) and brought into tight contact with the adjacent casings (31, 41, 51). As a result, the air leakage from the gaps between the adjacent casings (31, 41, 51) can be reduced.

In the ventilation apparatus (10) of the embodiment, the fourth casing (12) fixes the first, second, and third casings (31), (41), and (51) such that the first sealing member (61) is pressed by the first and second casings (31) and (41) and that the second sealing member (62) is pressed by the second and third casings (41) and (51).

The first to third casings (31, 41, 51) can be fixed in the fourth casing (12) because the first sealing member (61) and the second sealing member (62) are pressed. The first and second sealing members (61) and (62) are arranged by just being pressed by the adjacent casings (31, 41, 51). Thus, the modules can be easily detached from the fourth casing (12).

In the ventilation apparatus (10) of the embodiment, the fourth casing (12) is formed in a rectangular parallelepiped shape. The second casing (41) is longer than the first casing (31) and the third casing (51) in the length in the right-to-left direction (second direction) orthogonal to the front-to-back direction (first direction).

Thus, a space (first space (S1)) adjacent to the first casing (31) in the right-to-left direction and a space (second space (S2)) adjacent to the third casing (51) in the right-to-left direction are formed in the fourth casing (12). However, these spaces (the first space (S1) and the second space (S2)) can be eliminated in the ventilation apparatus (10) configured to include the first module (30) and the third module (50) but not the second module (40). As a result, the fourth casing (12) can be compact.

In the ventilation apparatus (10) of the embodiment, the fourth casing (12) is disposed along the ceiling surface (7) (first surface (7)) of the room, and the second direction is a direction orthogonal to the first direction and along the first surface (7).

Thus, the ventilation unit (11) can be disposed on the ceiling surface (7) such that the second casing (41) is longer than the first casing (31) and the third casing (51) in the length in the right-to-left direction (second direction). Such positioning allows the access hole (18) of the ventilation unit (11) to be formed on the ceiling surface (7). This can make it easier for a service technician to perform work, such as inspection and maintenance of the ventilation unit (11).

In the ventilation apparatus (10) of this embodiment, the left side surfaces of the first, second, and third casings (31), (41), and (51) are in contact with the first inner side surface (12ei) of the fourth casing (12).

This allows the first to third casings (31, 41, 51) to be aligned on the third side plate (12e) of the fourth casing (12). In addition, the left side surfaces of the first to third casings (31, 41, 51) can be fixed to the third side plate (12e).

In the ventilation apparatus (10) of this embodiment, the second inner side surface (12fi) of the fourth casing (12) is in contact with the right side surface of the second casing (41). Thus, the first and second inner side surfaces (12ei) and (12fi) can be used to regulate the movement of the second module (40) in the right-to-left direction in the fourth casing (12) and to fix the second module (40) in the fourth casing (12).

The ventilation apparatus (10) of this embodiment includes the fastening members (63a, 63b) (regulating members) that regulate the movement of the first and third casings (31) and (51) in the right-to-left direction. Thus, the third side plate (12e) and the first fastening member (63a) can regulate the movement of the first casing (31) in the right-to-left direction. In addition, the third side plate (12e) and the second fastening member (63b) can regulate the movement of the third casing (51) in the right-to-left direction. As can be seen, the first and third casings (31) and (51) can be fixed in the fourth casing (12) by utilizing the third side plate (12e). It is thus possible to eliminate the need to provide multiple first and second fastening members (63a, 63b) in the first casing (31) and the third casing (51).

**In** the ventilation apparatus (10) of this embodiment, the second module (40) includes the first refrigerant pipe joint (27a) and the second refrigerant pipe joint (27b) that connect the refrigerant heat exchanger (25) and the refrigerant pipes (86, 87) together. The refrigerant pipe joints (27a, 27b) are disposed in the first space (S1) formed by the inner surface of the fourth casing (12), the outer surface of the first casing (31), and the outer surface of the second casing (41).

It is thus possible to dispose the refrigerant pipes (86, 87) connected to the joints (27) in the first space (S1). As can be seen, an empty space in the fourth casing (12) can be effectively used.

According to the method for assembling the ventilation apparatus (10) of this embodiment, in assembling the ventilation apparatus (10) using the first, second, and third modules (30), (40), and (50), the first, second, and third modules (30), (40), and (50) are sequentially coupled together such that the first and second openings (38) and (42) overlap with each other and that the third and fourth openings (43) and (52) overlap with each other. On the other hand, in assembling the ventilation apparatus (10) using the first and third modules (30) and (50), the first and third modules (30) and (50) are coupled together such that the first and fourth openings (38) and (52) overlap with each other.

This assembling method enables selective manufacture of the ventilation apparatus (10) including the first, second, and third modules (30), (40), and (50) (strictly speaking, the first ventilation unit (11a)) and the ventilation apparatus (10) including the first and third modules (30) and (50) (strictly speaking, the second ventilation unit (11b)).

It is possible to form the first ventilation unit (11a) and the second ventilation unit (11b) selectively by simply changing the modules (30, 40, 50) to be assembled and therefore possible to manufacture the first ventilation unit (11a) or the second ventilation unit (11b) according to the user's needs. In addition, the first ventilation unit (11a) and the second ventilation unit (11b) are manufactured by using common modules (the first and third modules (30) and (50)). This eliminates the need to prepare parts in accordance with the respective ventilation units (11a, 11b). This can lower the manufacturing cost and can reduce the number of manufacturing steps.

In addition, since the second ventilation unit (11b) of the embodiment does not include the second casing (41), the fourth casing (12) of the second ventilation unit (11b) can be smaller than the fourth casing (12) of the first ventilation unit (11a). This can reduce the size of the ventilation unit (11).

In addition, in the second ventilation unit (11b) of the embodiment, the third and fourth side plates (12e) and (12f) of the fourth casing (12) can regulate the movements of the first casing (31) and the third casing (51) in the right-to-left direction. It is therefore possible to make the first and second fastening members (63a, 63b) unnecessary. In other words, the third side plate (12e) and the fourth side plate (12f) can fix the first casing (31) and the second casing (41) in the fourth casing (12).

### «Other Embodiments»

The embodiment and variations described above may also be configured as follows.

The functional element (25) may be a humidifier or an air purification unit. The air purification unit includes a filter that captures dust, mites, and other substances contained in the air flowing through the air supply path (13). The air purification unit may include a discharge device that decomposes hazardous substances contained in the air flowing through the air supply path (13) by discharge. The discharge device includes a plasma discharge device that performs streamer discharge or glow discharge.

The regulating members (63a, 63b) of the present disclosure may be any members as long as they regulate the movement of the first and third casings (31) and (51) in the right-to-left direction. For example, the regulating members (63a, 63b) may be protrusions (not shown) provided on the upper surface of the indoor panel (15) or the upper surface of the bottom plate (12b). Such protrusions are provided on a portion of the upper surface of the indoor panel (15) where the right side surface of the first casing (31) is disposed. Alternatively, such protrusions are provided on a portion of the bottom plate (12b) where the right side surface of the third casing (51) is disposed.

Such protrusions and the third side plate (12e) regulate the movement of the first and third casings (31) and (51) in the right-to-left direction. In particular, the protrusion for the third casing (51) may be formed by cutting and raising a portion of the bottom plate (12b) toward the internal space (16). Specifically, the protrusion is formed by cutting and raising a portion of the bottom plate (12b) where the right side surface of the third casing (51) is disposed, into a semicircular shape. The resultant semicircular protrusion is in contact with the right side surface of the third casing (51). This eliminates the need to provide the fastening members (63a, 63b) described in the foregoing embodiment and allows the first and third casings (31) and (51) to be fixed in the fourth casing (12) more easily than in a case where the fastening members (63a, 63b) are provided.

The ventilation unit (11) merely needs to have its first, second, and third modules (30), (40), and (50) sequentially coupled together, and does not have to include the fourth casing (12).

The ventilation unit (11) does not have to have its first, second, and third modules (30), (40), and (50) arranged in this order.

The fourth casing (12) merely needs to have therein the first and second spaces (S1) and (S2), and does not have to be in a rectangular solid shape.

The first sealing member (61) or the second sealing member (62) do not have to be provided as long as the air leaking from the gap between adjacent casings (31, 41, 51) can be reduced.

The first and second sealing members (61) and (62) do not have to be provided between the adjacent casings (31, 41, 51) by pressing. The first or second sealing member (61) or (62) may be fixed between an adjacent pair of the casings (31, 41, 51) by adhesion.

The second casing (41) may be fixed by the fastening members (63a, 63b). There may be a space adjacent to the second casing (41).

The joints (27) may be disposed in the second space (S2). This allows the connection pipes (86, 87) to be disposed in the second space (S2). Thus, the second space (S2) can be effectively used.

The ventilation unit (11) of the embodiment can be installed in a vertical position. For example, the ventilation unit (11) can be disposed in a space behind an inner wall of a building. In this case, the fourth casing (12) is disposed along the wall surface (7) behind the wall, which is the first surface (7) of the present disclosure. The first direction of the present disclosure is the top-to-bottom direction. Specifically, the ventilation unit (11) has its first, second, and third modules (30), (40), and (50) arranged in this order from the bottom to the top. In such a vertical position, as well, the first, second, third, and fourth openings (38), (42), (43), and (52) overlap with one another as viewed from the top-to-bottom direction (first direction). Since the first and fourth openings (38) and (52) at least partially overlap with each other, the first and fourth openings (38) and (52) overlap with each other even when the first and third modules (30) and (50) are directly coupled together. This enables the manufacture of a vertical ventilation unit (11) that includes the first and third modules (30) and (50) but not the second module (40).

While the embodiment and variations thereof have been described above, it will be understood that various changes in form and details may be made without departing from the scope of the claims. The foregoing embodiments and variations thereof may be combined and replaced with each other without deteriorating the intended functions of the present disclosure. The expressions of "first," "second," . . . described above are used to distinguish the terms to which these expressions are given, and do not limit the number and order of the terms.

### INDUSTRIAL APPLICABILITY

As can be seen from the foregoing description, the present disclosure is useful for a ventilation apparatus and a method for assembling a ventilation apparatus.

### DESCRIPTION OF REFERENCE CHARACTERS

- AP: Air Passage
- S1: First Space
- S2: Second Space
- 7: First Surface
- 10: Ventilation Apparatus
- 12: Fourth Casing
- 12ei: First Inner Side Surface
- 12fi: Second Inner Side Surface
- 13: Air Supply Path
- 14: Exhaust Path
- 21: First Heat Exchanger
- 22: Air Supply Fan (Fan)
- 25: Utilization Heat Exchanger (Functional Element, Refrigerant Heat Exchanger)
- 27: Joint
- 27a: First Refrigerant Pipe Joint (Joint)
- 27b: Second Refrigerant Pipe Joint (Joint)
- 30: First Module
- 31: First Casing
- 38: First Opening
- 40: Second Module
- 41: Second Casing
- 42: Second Opening
- 43: Third Opening
- 50: Third Module
- 51: Third Casing
- 52: Fourth Opening
- 61: First Sealing Member
- 62: Second Sealing Member

## Claims

1. A ventilation apparatus having an air passage (AP), the air passage (AP) including an air supply path (13) through which outdoor air is supplied into a room and an exhaust path (14) through which room air is exhausted to an outside of the room, the ventilation apparatus including an inlet (15a) that communicates with the exhaust path (14), the ventilation apparatus comprising:
a first module (30) including a first casing (31) having a first opening (38), and a first heat exchanger (21) housed in the first casing (31) and configured to exchange heat between air flowing through the air supply path (13) and air flowing through the exhaust path (14);
a second module (40) including a second casing (41) having a second opening (42) and a third opening (43), and a functional element (25) housed in the second casing (41) and configured to treat air; and
a third module (50) including a third casing (51) having a fourth opening (52), and a fan (22) housed in the third casing (51),
in a state in which the first, second, and third modules (30), (40), and (50) are sequentially coupled together, the first, second, third, and fourth openings (38), (42), (43), and (52) overlapping with one another as viewed from a first direction, which is a direction of arrangement of the first, second, and third modules (30), (40), and (50), so that the air passage (AP) is formed from the first module (30) to the third module (50),
**characterized by**
the first heat exchanger (21) including an air supply internal flow path (21a) through which the air flowing through the air supply path (13) passes and an exhaust internal flow path (21b) through which the air flowing through the exhaust path (14) passes, the first heat exchanger (21) being placed such that an inflow surface of the exhaust internal flow path (21b) lies along an opening surface of the inlet (15a), wherein the air supply internal flow path (21a) and the exhaust internal flow path (21b) are substantially orthogonal to each other.

2. The ventilation apparatus of claim 1 further comprising:
a first sealing member (61) and a second sealing member (62), wherein
the first and second casings (31) and (41) are coupled together via the first sealing member (61), and the second and third casings (41) and (51) are coupled together via the second sealing member (62).

3. The ventilation apparatus of claim 2, wherein
the first and second sealing members (61) and (62) contain an elastic material,
the first sealing member (61) is fixed by being pressed by the first and second casings (31) and (41), and
the second sealing member (62) is fixed by being pressed by the second and third casings (41) and (51).

4. The ventilation apparatus of claim 3 further comprising:
a fourth casing (12) in which the first, second, and third modules (30), (40), and (50) are disposed, wherein
the fourth casing (12)
fixes the first, second, and third casings (31), (41), and (51) so that the first sealing member (61) is pressed by the first and second casings (31) and (41) and that the second sealing member (62) is pressed by the second and third casings (41) and (51).

5. The ventilation apparatus of claim 4, wherein
the fourth casing (12) is formed in a rectangular parallelepiped shape, and
the second casing (41) is longer than the first and third casings (31) and (51) in a length in a second direction orthogonal to the first direction.

6. The ventilation apparatus of claim 5, wherein
the fourth casing (12) is disposed along a first surface (7), the first surface (7) being a ceiling surface or a wall surface of the room, and
the second direction is orthogonal to the first direction and along the first surface (7).

7. The ventilation apparatus of claim 5 or 6, wherein
when one of two inner surfaces of the fourth casing (12) facing each other in the second direction is defined as a first inner side surface (12ei),
one end of each of the first, second, and third casings (31), (41), and (51) in the second direction is in contact with the first inner side surface (12ei).

8. The ventilation apparatus of claim 7, wherein
of the inner surfaces of the fourth casing (12), a second inner side surface (12fi) facing the first inner side surface (12ei) is in contact with another end of the second casing (41) in the second direction.

9. The ventilation apparatus of claim 8 further comprising:
regulating members (63a, 63b) configured to regulate movements of the first and third casings (31) and (51) in the second direction.

10. The ventilation apparatus of any one of claims 4 to 9, wherein
the functional element (25) is a refrigerant heat exchanger (25) configured to allow air flowing through the second module (40) to exchange heat with a refrigerant,
the second module (40) includes a joint (27) configured to connect the refrigerant heat exchanger (25) and a refrigerant pipe (86, 87) together, and
the joint (27) is disposed in
a first space (S1) formed by an inner surface of the fourth casing (12), an outer surface of the first casing (31), and an outer surface of the second casing (41), or
a second space (S2) formed by the inner surface of the fourth casing (12), the outer surface of the second casing (41), and an outer surface of the third casing (51).

11. A method for assembling a ventilation apparatus (10), the ventilation apparatus (10) having an air passage (AP), the air passage (AP) including an air supply path (13) through which outdoor air is supplied into a room, and an exhaust path (14) through which room air is exhausted to an outside of the room, the ventilation apparatus (10) including an inlet (15a) that communicates with the exhaust path (14), the method comprising:
in assembling the ventilation apparatus (10) using a first module (30), a second module (40), and a third module (50),
the first module (30) including a first casing (31) having a first opening (38), and a first heat exchanger (21) housed in the first casing (31) and configured to exchange heat between air flowing through the air supply path (13) and air flowing through the exhaust path (14),
the second module (40) including a second casing (41) having a second opening (42) and a third opening (43), and a functional element (25) housed in the second casing (41) and configured to treat air,
the third module (50) including a third casing (51) having a fourth opening (52), and a fan (22) housed in the third casing (51),
sequentially coupling the first, second, and third modules (30), (40), and (50) together such that the first and second openings (38) and (42) overlap with each other and that the third and fourth openings (43) and (52) overlap with each other; and
in assembling the ventilation apparatus (10) using the first and third modules (30) and (50), coupling the first and third modules (30) and (50) together such that the first and fourth openings (38) and (52) overlap with each other,
the first heat exchanger (21) including an air supply internal flow path (21a) through which the air flowing through the air supply path (13) passes and an exhaust internal flow path (21b) through which the air flowing through the exhaust path (14) passes, the first heat exchanger (21) being placed such that an inflow surface of the exhaust internal flow path (21b) lies along an opening surface of the inlet (15a), wherein the air supply internal flow path (21a) and the exhaust internal flow path (21b) are substantially orthogonal to each other.

## Patentansprüche

1. Lüftungsvorrichtung, die einen Luftdurchlass (AP) aufweist, wobei der Luftdurchlass (AP) einen Luftzufuhrweg (13), durch den Außenluft in einen Raum zugeführt wird, und einen Abführweg (14) einschließt, durch den Raumluft zu einer Außenseite des Raums abgeführt wird, wobei die Lüftungsvorrichtung einen Einlass (15a) einschließt, der mit dem Abführweg (14) kommuniziert, wobei die Lüftungsvorrichtung umfasst:
ein erstes Modul (30), das ein erstes Gehäuse (31) einschließt, das eine erste Öffnung (38) und einen ersten Wärmetauscher (21) aufweist, der im ersten Gehäuse (31) aufgenommen ist und ausgebildet ist, um Wärme zwischen Luft, die durch den Luftzufuhrweg (13) strömt, und Luft, die durch den Abführweg (14) strömt, auszutauschen;
ein zweites Modul (40), das ein zweites Gehäuse (41) einschließt, das eine zweite Öffnung (42) und eine dritte Öffnung (43) und ein funktionelles Element (25) aufweist, das im zweiten Gehäuse (41) aufgenommen ist und ausgebildet ist, um Luft aufzubereiten; und
ein drittes Modul (50), das ein drittes Gehäuse (51) einschließt, das eine vierte Öffnung (52) und ein Gebläse (22) aufweist, das im dritten Gehäuse (51) aufgenommen ist,
in einem Zustand, in dem das erste, zweite und dritte Modul (30), (40) und (50) nacheinander aneinandergekoppelt sind, wobei sich die erste, zweite, dritte und vierte Öffnung (38), (42), (43) und (52), von einer ersten Richtung aus betrachtet, die eine Anordnungsrichtung des ersten, zweiten und dritten Moduls (30), (40) und (50) ist, einander überlappen, sodass der Luftdurchlass (AP) vom ersten Modul (30) zum dritten Modul (50) gebildet wird,
**dadurch gekennzeichnet, dass**
der erste Wärmetauscher (21) einen inneren Luftzufuhrströmungsweg (21a) einschließt, durch den die durch den Luftzufuhrweg (13) strömende Luft hindurchströmt, und einen inneren Abführströmungsweg (21b), durch den die durch den Abführweg (14) strömende Luft hindurchströmt, der erste Wärmetauscher (21) so platziert ist, dass eine Einströmungsfläche des inneren Abführströmungswegs (21b) entlang einer Öffnungsfläche des Einlasses (15a) liegt, wobei der innere Luftzufuhrströmungsweg (21a) und der innere Abführströmungsweg (21b) im Wesentlichen orthogonal zueinander sind.

2. Lüftungsvorrichtung nach Anspruch 1, weiter umfassend:
ein erstes Dichtungselement (61) und ein zweites Dichtungselement (62), wobei
das erste und zweite Gehäuse (31) und (41) über das erste Dichtungselement (61) aneinandergekoppelt sind, und das zweite und dritte Gehäuse (41) und (51) über das zweite Dichtungselement (62) aneinandergekoppelt sind.

3. Lüftungsvorrichtung nach Anspruch 2, wobei
das erste und zweite Dichtungselement (61) und (62) ein elastisches Material enthalten,
das erste Dichtungselement (61) befestigt wird, indem es von dem ersten und zweiten Gehäuse (31) und (41) gedrückt wird, und
das zweite Dichtungselement (62) befestigt wird, indem es von dem zweiten und dritten Gehäuse (41) und (51) gedrückt wird.

4. Lüftungsvorrichtung nach Anspruch 3, weiter umfassend:
ein viertes Gehäuse (12), in dem das erste, zweite und dritte Modul (30), (40) und (50) angeordnet sind, wobei
das vierte Gehäuse (12) das erste, zweite und dritte Gehäuse (31), (41) und (51) befestigt, sodass das erste Befestigungselement (61) von dem ersten und zweiten Gehäuse (31) und (41) gedrückt wird und dass das zweite Befestigungselement (62) von dem zweiten und dritten Gehäuse (41) und (51) gedrückt wird.

5. Lüftungsvorrichtung nach Anspruch 4, wobei
das vierte Gehäuse (12) in einer rechteckigen Quaderform gebildet ist, und
das zweite Gehäuse (41) in einer Länge in einer zweiten Richtung orthogonal zur ersten Richtung länger ist als das erste und dritte Gehäuse (31) und (51).

6. Lüftungsvorrichtung nach Anspruch 5, wobei
das vierte Gehäuse (12) entlang einer ersten Fläche (7) angeordnet ist, wobei die erste Fläche (7) eine Raumdeckenfläche oder eine Wandfläche des Raums ist, und
die zweite Richtung orthogonal zur ersten Richtung und entlang der ersten Richtung verläuft.

7. Lüftungsvorrichtung nach Anspruch 5 oder 6, wobei
wenn eine der zwei Innenflächen des vierten Gehäuses (12), die einander in der zweiten Richtung zugewandt sind, als eine erste Innenseitenfläche (12ei) definiert ist,
ein Ende jedes des ersten, zweiten und dritten Gehäuses (31), (41) und (51) in der zweiten Richtung mit der ersten Innenseitenfläche (12ei) in Kontakt steht.

8. Lüftungsvorrichtung nach Anspruch 7, wobei
von den Innenflächen des vierten Gehäuses (12) eine zweite Innenseitenfläche (12fi), die der ersten Innenseitenfläche (12ei) zugewandt ist, mit einem anderen Ende des zweiten Gehäuses (41) in der zweiten Richtung in Kontakt steht.

9. Lüftungsvorrichtung nach Anspruch 8, weiter umfassend:
Regulierungsteile (63a, 63b), die ausgebildet sind, um Bewegungen des ersten und dritten Gehäuses (31) und (51) in der zweiten Richtung zu regulieren.

10. Lüftungsvorrichtung nach einem der Ansprüche 4 bis 9, wobei
das funktionelle Element (25) ein Kältemittel-Wärmetauscher (25) ist, der ausgebildet ist, um zu ermöglichen, dass Luft, die durch das zweite Modul (40) strömt, Wärme mit einem Kältemittel tauscht,
wobei das zweite Modul (40) ein Gelenk (27) einschließt, das ausgebildet ist, um den Kältemittel-Wärmetauscher (25) und eine Kältemittelleitung (86, 87) miteinander zu verbinden, und
das Gelenk (27) angeordnet ist in
einem ersten Raum (S1), der durch eine Innenfläche des vierten Gehäuses (12), eine Außenfläche des ersten Gehäuses (31) und eine Außenfläche des zweiten Gehäuses (41) gebildet ist, oder
einem zweiten Raum (S2), der durch die Innenfläche des vierten Gehäuses (12), die Außenfläche des zweiten Gehäuses (41) und eine Außenfläche des dritten Gehäuses (51) gebildet ist.

11. Verfahren zur Montage einer Lüftungsvorrichtung (10), wobei die Lüftungsvorrichtung (10) einen Luftdurchlass (AP) aufweist, wobei der Luftdurchlass (AP) einen Luftzufuhrweg (13), durch den Außenluft in einen Raum zugeführt wird, und einen Abführweg (14) einschließt, durch den Raumluft zu einer Außenseite des Raums abgeführt wird, wobei die Lüftungsvorrichtung (10) einen Einlass (15a) einschließt, der mit dem Abführweg (14) kommuniziert, wobei das Verfahren umfasst:
beim Montieren der Lüftungsvorrichtung (10), Verwenden eines ersten Moduls (30), eines zweiten Moduls (40) und eines dritten Moduls (50),
wobei das erste Modul (30) ein erstes Gehäuse (31) einschließt, das eine erste Öffnung (38) und einen ersten Wärmetauscher (21) aufweist, der im ersten Gehäuse (31) aufgenommen ist und ausgebildet ist, um Wärme zwischen Luft, die durch den Luftzufuhrweg (13) strömt, und Luft, die durch den Abführweg (14) strömt, auszutauschen,
das zweite Modul (40) ein zweites Gehäuse (41) einschließt, das eine zweite Öffnung (42) und eine dritte Öffnung (43) und ein funktionelles Element (25) aufweist, das im zweiten Gehäuse (41) aufgenommen ist und ausgebildet ist, um Luft aufzubereiten,
das dritte Modul (50) ein drittes Gehäuse (51) einschließt, das eine vierte Öffnung (52) und ein Gebläse (22) aufweist, das im dritten Gehäuse (51) aufgenommen ist,
Koppeln des ersten, zweiten und dritten Moduls (30), (40) und (50) nacheinander aneinander, sodass die erste und zweite Öffnung (38) und (42) einander überlappen und dass die dritte und vierte Öffnung (43) und (52) einander überlappen, und
beim Montieren der Lüftungsvorrichtung (10), Verwenden des ersten und dritten Moduls (30) und (50), Koppeln des ersten und dritten Moduls (30) und (50) aneinander, sodass die erste und vierte Öffnung (38) und (52) einander überlappen,
wobei der erste Wärmetauscher (21) einen inneren Luftzufuhrströmungsweg (21a) einschließt, durch den die durch den Luftzufuhrweg (13) strömende Luft hindurchströmt, und einen inneren Abführströmungsweg (21b), durch den die durch den Abführweg (14) strömende Luft hindurchströmt, der erste Wärmetauscher (21) so platziert ist, dass eine Einströmungsfläche des inneren Abführströmungswegs (21b) entlang einer Öffnungsfläche des Einlasses (15a) liegt, wobei der innere Luftzufuhrströmungsweg (21a) und der innere Abführströmungsweg (21b) im Wesentlichen orthogonal zueinander sind.

## Revendications

1. Appareil de ventilation présentant un passage d'air (AP), le passage d'air (AP) incluant un chemin d'alimentation en air (13) à travers lequel l'air extérieur est amené dans une pièce et un chemin d'évacuation (14) à travers lequel l'air de la pièce est évacué vers l'extérieur de la pièce, l'appareil de ventilation incluant une entrée (15a) qui communique avec le chemin d'évacuation (14), l'appareil de ventilation comprenant :
un premier module (30) incluant un premier carter (31) présentant une première ouverture (38), et un premier échangeur de chaleur (21) logé dans le premier carter (31) et configuré pour échanger de la chaleur entre l'air s'écoulant à travers le chemin d'alimentation en air (13) et l'air s'écoulant à travers le chemin d'évacuation (14) ;
un deuxième module (40) incluant un deuxième carter (41) présentant une deuxième ouverture (42) et une troisième ouverture (43), et un élément fonctionnel (25) logé dans le deuxième carter (41) et configuré pour traiter l'air ; et
un troisième module (50) incluant un troisième carter (51) présentant une quatrième ouverture (52), et un ventilateur (22) logé dans le troisième carter (51),
dans un état dans lequel les premier, deuxième et troisième modules (30), (40) et (50) sont couplés séquentiellement les uns aux autres, les première, deuxième, troisième et quatrième ouvertures (38), (42), (43) et (52) se chevauchant les unes les autres lorsqu'on les observe selon une première direction, qui est une direction d'agencement des premier, deuxième et troisième modules (30), (40) et (50), de sorte que le passage d'air (AP) est formé depuis le premier module (30) vers le troisième module (50),
**caractérisé en ce que**
le premier échangeur de chaleur (21) incluant un chemin d'écoulement interne d'alimentation en air (21a) à travers lequel passe l'air s'écoulant à travers le chemin d'alimentation en air (13) et un canal d'écoulement interne d'évacuation (21b) au travers duquel passe l'air s'écoulant à travers le chemin d'évacuation (14), le premier échangeur de chaleur (21) étant placé de telle sorte qu'une surface d'entrée du canal d'écoulement interne d'évacuation (21b) s'étend le long d'une surface d'ouverture de l'entrée (15a), dans lequel le canal d'écoulement interne d'alimentation en air (21a) et le canal d'écoulement interne d'évacuation (21b) sont sensiblement orthogonaux l'un par rapport à l'autre.

2. Appareil de ventilation selon la revendication 1, comprenant en outre :
un premier élément d'étanchéité (61) et un deuxième élément d'étanchéité (62), dans lequel
les premier et deuxième carters (31) et (41) sont couplés ensemble via le premier élément d'étanchéité (61), et les deuxième et troisième carters (41) et (51) sont couplés ensemble via le deuxième élément d'étanchéité (62).

3. Appareil de ventilation selon la revendication 2, dans lequel
les premier et deuxième éléments d'étanchéité (61) et (62) contiennent un matériau élastique,
le premier élément d'étanchéité (61) est fixé par pression par les premier et deuxième carters (31) et (41), et
le deuxième élément d'étanchéité (62) est fixé par pression par les deuxième et troisième carters (41) et (51).

4. Appareil de ventilation selon la revendication 3, comprenant en outre :
un quatrième carter (12) dans lequel sont disposés les premier, deuxième et troisième modules (30), (40) et (50), dans lequel
le quatrième carter (12)
fixe les premier, deuxième et troisième carters (31), (41) et (51) de telle sorte que le premier élément d'étanchéité (61) est pressé par les premier et deuxième carters (31) et (41) et que le deuxième élément d'étanchéité (62) est pressé par les deuxième et troisième carters (41) et (51).

5. Appareil de ventilation selon la revendication 4, dans lequel
le quatrième carter (12) est formé selon une forme parallélépipédique rectangulaire, et
le deuxième carter (41) est plus long que les premier et troisième carters (31) et (51) dans une longueur dans une deuxième direction orthogonale à la première direction.

6. Appareil de ventilation selon la revendication 5, dans lequel
le quatrième carter (12) est disposé le long d'une première surface (7), la première surface (7) étant une surface de plafond ou une surface de mur de la pièce, et
la deuxième direction est orthogonale à la première direction et s'étend le long de la première surface (7).

7. Appareil de ventilation selon la revendication 5 ou 6, dans lequel
lorsque l'une des deux surfaces internes du quatrième carter (12) se faisant face dans la deuxième direction est définie comme une première surface latérale interne (12ei),
une extrémité de chacun des premier, deuxième et troisième carters (31), (41) et (51) dans la deuxième direction est en contact avec la première surface latérale interne (12ei).

8. Appareil de ventilation selon la revendication 7, dans lequel
parmi les surfaces internes du quatrième carter (12), une deuxième surface latérale interne (12fi) faisant face à la première surface latérale interne (12ei) est en contact avec une autre extrémité du deuxième carter (41) dans la deuxième direction.

9. Appareil de ventilation selon la revendication 8, comprenant en outre :
des éléments de régulation (63a, 63b) configurés pour réguler les mouvements des premier et troisième carters (31) et (51) dans la deuxième direction.

10. Appareil de ventilation selon l'une quelconque des revendications 4 à 9, dans lequel
l'élément fonctionnel (25) est un échangeur de chaleur à réfrigérant (25) configuré pour permettre à l'air s'écoulant à travers le deuxième module (40) d'échanger de la chaleur avec un réfrigérant,
le deuxième module (40) inclut un joint (27) configuré pour connecter ensemble l'échangeur de chaleur à réfrigérant (25) et un tuyau de réfrigérant (86, 87), et
le joint (27) est disposé dans
un premier espace (S1) formé par une surface interne du quatrième carter (12), une surface externe du premier boîtier (31) et une surface externe du deuxième carter (41), ou
un deuxième espace (S2) formé par la surface interne du quatrième carter (12), la surface externe du deuxième carter (41) et une surface externe du troisième carter (51).

11. Procédé d'assemblage d'un appareil de ventilation (10), l'appareil de ventilation (10) présentant un passage d'air (AP), le passage d'air (AP) incluant un chemin d'alimentation en air (13) à travers lequel l'air extérieur est amené dans une pièce, et un chemin d'évacuation (14) à travers lequel l'air de la pièce est évacué vers l'extérieur de la pièce, l'appareil de ventilation (10) incluant une entrée (15a) qui communique avec le chemin d'évacuation (14), le procédé comprenant :
l'assemblage de l'appareil de ventilation (10) en utilisant un premier module (30), d'un deuxième module (40) et d'un troisième module (50),
le premier module (30) incluant un premier carter (31) ayant une première ouverture (38), et un premier échangeur de chaleur (21) logé dans le premier carter (31) et configuré pour échanger de la chaleur entre l'air s'écoulant à travers le chemin d'alimentation en air (13) et l'air s'écoulant à travers le chemin d'évacuation (14),
le deuxième module (40) incluant un deuxième carter (41) présentant une deuxième ouverture (42) et une troisième ouverture (43), et un élément fonctionnel (25) logé dans le deuxième carter (41) et configuré pour traiter l'air ; et
le troisième module (50) incluant un troisième carter (51) présentant une quatrième ouverture (52), et un ventilateur (22) logé dans le troisième carter (51),
le couplage séquentiel des premier, deuxième et troisième modules (30), (40) et (50) ensemble de telle sorte que les première et deuxième ouvertures (38) et (42) se chevauchent et que les troisième et quatrième ouvertures (43) et (52) se chevauchent ; et
lors de l'assemblage de l'appareil de ventilation (10) en utilisant des premier et troisième modules (30) et (50), le couplage des premier et troisième modules (30) et (50) ensemble de telle sorte que les première et quatrième ouvertures (38) et (52) se chevauchent,
le premier échangeur de chaleur (21) incluant un chemin d'écoulement interne d'alimentation en air (21a) à travers lequel passe l'air s'écoulant à travers le chemin d'alimentation en air (13) et un canal d'écoulement interne d'évacuation (21b) au travers duquel passe l'air s'écoulant à travers le chemin d'évacuation (14),
le premier échangeur de chaleur (21) étant placé de telle sorte qu'une surface d'entrée du canal d'écoulement interne d'évacuation (21b) s'étend le long d'une surface d'ouverture de l'entrée (15a), dans lequel le canal d'écoulement interne d'alimentation en air (21a) et le canal d'écoulement interne d'évacuation (21b) sont sensiblement orthogonaux l'un par rapport à l'autre.
